# EUROPÄISCHE PATENTSCHRIFT

(11) **EP 4 226 487 B1**
(45) Veröffentlichungstag und Bekanntmachung des Hinweises auf die Patenterteilung: **09.09.2026**
(21) Anmeldenummer: 21746636.6
(22) Anmeldetag: 15.07.2021
(51) Int. Cl.: H02K 1/2796, H02K 21/24

(54) **ROTOR EINER ELEKTRISCHEN ROTATIONSMASCHINE SOWIE ELEKTRISCHE ROTATIONSMASCHINE**
ROTOR OF AN ELECTRIC ROTATING MACHINE, AND ELECTRIC ROTATING MACHINE
ROTOR DE MACHINE ÉLECTRIQUE TOURNANTE ET MACHINE ÉLECTRIQUE TOURNANTE

(30) Priorität: 07.10.2020 DE 102020126297; 06.05.2021 DE 102021111836
(43) Veröffentlichungstag der Anmeldung: 16.08.2023
(73) Patentinhaber: Schaeffler Technologies AG & Co. KG, 91074 Herzogenaurach (DE)
(72) Erfinder: RIESS, Stefan, 86916 Kaufering (DE); MENHART, Michael, 86859 Igling (DE); OSWALD, Johann, 82438 Eschenlohe (DE); MAHLER, Daniel, 86928 Hofstetten (DE)
(74) Vertreter: Schaeffler Technologies
(86) Internationale Anmeldenummer: PCT/DE2021/100621
(87) Internationale Veröffentlichungsnummer: WO 2022/073533

(56) Entgegenhaltungen:
- EP-A1- 3 376 640
- EP-A2- 1 717 935
- DE-A1- 102005 009 523
- DE-A1- 102007 013 732
- DE-A1- 102014 111 234
- US-A1- 2010 052 452
- US-B2- 8 179 008

## Beschreibung

Die Erfindung betrifft eine elektrische Rotationsmaschine, insbesondere einer Axialflussmaschine.

Der elektrische Antriebsstrang ist nach dem Stand der Technik bekannt. Dieser besteht aus Komponenten zur Energiespeicherung, Energiewandlung und Energieleitung. Zu den Komponenten der Energiewandlung gehören elektrische Maschinen bspw. Axialflussmaschinen. Axialflussmaschinen sind nach dem Stand der Technik in diversen Bauweisen mit einem oder mehreren Statoren und einem oder mehreren Rotoren bekannt.

Eine elektrische Axialflussmaschine, auch als Transversalflussmaschine bezeichnet, ist ein Motor oder Generator, bei dem der Magnetfluss zwischen einem Rotor und einem Stator parallel zur Drehachse des Rotors realisiert wird. Andere Bezeichnungen für elektrische Axialflussmaschinen sind auch bürstenloser Gleichstrommotor, permanenterregter Synchronmotor oder Scheibenläufermotor.

Eine solche Axialflussmaschine kann in Bauarten ausgeführt sein, welche sich durch die Anordnung von Rotor und/oder Stator unterscheiden, und unterschiedliche Besonderheiten und Vorteile bei der Anwendung, als z.B. Traktionsmaschine für ein Fahrzeug, realisieren.

Bei herkömmlichen Ausführungsformen einer Axialflussmaschine ist der Rotor im Wesentlichen mit Ausnahme einer Nabe als flache Scheibe ausgeführt, deren Breite durch die Breite der verbauten Magnete bestimmt ist.

Für hohe Leistungsdichten ist es dabei erstrebenswert, den axialen Abstand zwischen dem Stator und dem Rotor gering zu halten.

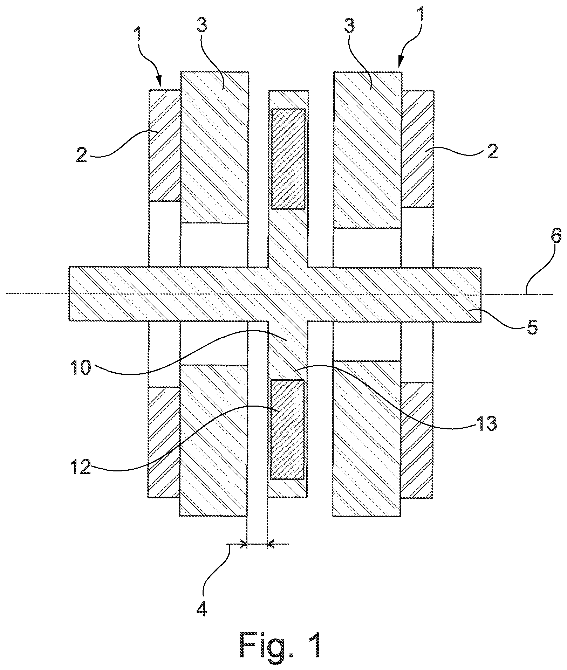

Figur 1 zeigt eine Ausführungsform einer herkömmlichen Axialflussmaschine. Diese umfasst axial beidseitig eines Rotors 10 angeordnet 2 Statoren 1, mit jeweils einem Statorkern 2 und daran axial ausgerichteten Wicklungen 3.

Der Rotor 10 ist auf einer Welle 5 angeordnet, zur Drehung des Rotors 10 um die Rotationsachse 6. Koaxial zur Rotationsachse 6 sind auch die Statoren 1 angeordnet. Axial zwischen einem jeweiligen Stator 1 und dem Rotor 10 ist axial jeweils ein Spalt 4 ausgebildet. Der Rotor 10 umfasst mehrere Magnete 12, die von einem Magnetträger 13 gehalten sind.

Aus der elektromagnetischen Kopplung zwischen Wicklung und Eisen weiterer Bestandteile der elektrischen Maschine resultieren im Betrieb der elektrischen Maschine wechselnde Kräfte auf die Magneten 12 des Rotors 10, die gegebenenfalls zu Verformungen des Rotors 10 und/ oder auch zu Verschleiß oder Ermüdungsverhalten führen können. Der Spalt 4 zwischen Stator 1 und Rotor 10 ist entsprechend derart groß zu gestalten, dass es trotz Verformungen des Rotors 10 nicht zu Kollisionen zwischen Rotor 10 und Stator 1 kommen kann. Dies senkt jedoch die Leistungsdichte, mit der die betreffende Axialflussmaschine betrieben werden kann.

Die WO 2020/ 065488 A1 offenbart einen Rotor einer elektromagnetischen Axialflussmaschine mit einem Körper, der eine interne Nabe umfasst, die konzentrisch zur Drehachse ist. Der Körper umfasst des Weiteren radiale Streben, die sich bis zu einem äußeren Reifen erstrecken, der einen äußeren kreisförmigen Rand des Rotors bildet. In jedem Raum, der zwischen zwei benachbarten Streben definiert ist, umfasst eine Magnetstruktur mehrere Magnete. Der Körper ist aus mehreren gestapelten Schichten aus Verbundwerkstoffen, die Fasern enthalten, gebildet, die durch ein Harz gebunden sind.

Aus jeder der EP 3 376 640 A1 und der DE 10 2005 009523 A1 ist eine elektrische Rotationsmaschine gemäß dem Oberbegriff des Anspruchs 1 bekannt.

Bezüglich weiteren Standes der Technik wird auf die US 2010/052452 A1 und die DE 10 2007 013732 A1 verwiesen.

Hiervon ausgehend liegt der vorliegenden Erfindung die Aufgabe zugrunde, eine elektrische Rotationsmaschine, insbesondere eine Axialflussmaschine zur Verfügung zu stellen, die in einfacher, kostengünstiger Ausgestaltung einen effizienten und verschleißarmen Betrieb gewährleisten.

Diese Aufgabe wird durch die elektrische Rotationsmaschine nach Anspruch 1 gelöst. Vorteilhafte Ausführungsformen der elektrischen Rotationsmaschine sind in den Unteransprüchen 2 bis 9 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe radial, axial und Umfangsrichtung beziehen sich im Rahmen der vorliegenden Erfindung immer auf die Drehachse des Rotors der elektrischen Rotationsmaschine.

Die Erfindung eine elektrische Rotationsmaschine, insbesondere einer Axialflussmaschine, mit einem Rotor umfassend mehrere Magnete und zur Fixierung der Magnete einen Magnetträger, mit dem die Magnete in Bezug zu einer Nabe des Rotors auf einem Umfang positioniert sind. Der Magnetträger erstreckt sich nach radial außen weiter als die Magnete, und weist auf dem Umfang der Positionierung der Magnete eine erste axiale Breite auf. Radial außerhalb der Magnete bildet der Rotor eine Verbreiterung aus, die eine zweite axiale Breite aufweist, die größer ist als die erste axiale Breite.

Der Rotor der erfindungsgemäßen elektrischen Rotationsmaschine ist somit in einer sogenannten "I-Anordnung" ausgeführt, also mit einer im Wesentlichen flach ausgebildeten Scheibe als Magnetträger.

Der Umfang, auf dem die Magnete angeordnet sind, ist durch eine Kreisringfläche definiert, die radial innen und außen begrenzt durch einen inneren Umfang und einen äußeren Umfang begrenzt ist.

Die erste axiale Breite kann durch den Abstand der axialen Begrenzungsflächen des Magnetträgers selbst oder der auf diesem Umfang angeordneten Magneten definiert sein.

Auf Grund der generellen Kreisform des Rotors ist die Verbreiterung ebenfalls kreisringförmig ausgebildet. Die Verbreiterung kann auch als Fassring bezeichnet werden.

Die zweite axiale Breite kann beispielsweise das bis zu 1,5-fache der ersten axialen Breite betragen.

Durch die Verbreiterung erhält der Magnetträger an der radialen Außenseite ein erhöhtes Flächenträgheitsmoment, wodurch einer von Kreiselkräften bewirkten Verformung entgegengewirkt werden kann. Mit anderen Worten wird der Magnetträger an seiner radialen Außenseite durch die Verbreiterung versteift, sodass er in geringerem Maße auch bei wirkenden Kreiselkräften an seiner radialen Außenseite keine axiale Verformung erfährt. Dies ermöglicht es, den Spalt zwischen dem Rotor und einem angrenzenden Stator sehr gering zu halten, sodass der Bereich eines zwischen Stator und Rotor wirkenden Magnetfeldes für den Betrieb der elektrischen Rotationsmaschine genutzt werden kann, in welchem die Leistungsdichte am höchsten ist. Entsprechend erbringt die Verbreiterung einen Beitrag an der Erhöhung der Effizienz der elektrischen Rotationsmaschine.

Zudem wird durch die Verbreiterung eine Materialkonzentration an der radialen Außenseite des Rotors realisiert, die auch in radialer Richtung zu einer Verstärkung bzw. Versteifung des Rotors führt, sodass insbesondere von den Magneten auf dem Magnetträger aufgebrachte Fliehkräfte auch von der Verbreiterung aufgenommen werden können und demzufolge insgesamt die Festigkeit des Rotors gegenüber Fliehkräften erhöht ist.

Insbesondere kann die Verbreiterung bezogen auf eine senkrecht zu einer Rotationsachse des Rotors verlaufende Mittenebene des Rotors achsensymmetrisch ausgebildet sein.

Die Mittenebene ist dabei eine Ebene, die durch die axiale Mitte des Rotors und gegebenenfalls der Magnete verläuft. Bei axialer Symmetrie des Rotors und der Magnetanordnung verläuft in dieser Mittenebene eine Symmetrieachse, die senkrecht zur Rotationsachse ausgerichtet ist.

Dadurch entsteht im Querschnitt des Rotors eine T-Form im Bereich der Verbreiterung, wobei sich der zentrale Steg der T-Form in der Mittenebene erstreckt.

In einer Ausführungsform ist vorgesehen, dass der Magnetträger im Wesentlichen aus einem elektrisch nicht leitfähigen Material gefertigt ist.

Insbesondere ist vorgesehen, dass der Magnetträger vollständig aus einem elektrisch nicht leitfähigen Material gefertigt ist. Dabei kann der Magnetträger aus einem glasfaserverstärkten Kunststoff oder aus einem carbonfaserverstärkten Kunststoff gefertigt sein.

Der Magnetträger kann aus den genannten Fasern gewickelt sein und mit einem entsprechenden Matrix-Material verfestigt worden sein, oder aber der Magnetträger ist aus Matten aus dem entsprechenden Fasermaterial erzeugt worden, welche nach gewünschter Formgebung mit dem Matrix-Material verfestigt worden sind.

Die gleichen Materialien bzw. Fertigungsverfahren können auch für die Herstellung der Verbreiterung angewendet werden. In einer speziellen Ausführungsform des Magnetträgers umfasst dieser als integrales Bestandteil die Verbreiterung. In diesem Fall ist die Verbreiterung also bei der Wicklung der entsprechenden Fasern zusammen mit den restlichen Bestandteilen des Magnetträgers erzeugt worden, bzw. ist bei der Formgebung der Matten aus dem entsprechenden Fasermaterial zusammen mit den restlichen Bestandteilen des Magnetträgers hergestellt worden.

Das gleiche gilt für die Verbreiterung, die ein integraler Bestandteil des Magnetträgers sein kann.

Eine weitere vorteilhafte Ausführungsform sieht vor, dass der Rotor an wenigstens einer axialen Seite und die Magnete im Wesentlichen axial abdeckend zumindest ein Deckelement aufweist.

Ein solches Deckelement kann auch als Decklage bezeichnet werden. Insbesondere kann der Rotor an beiden axialen Seiten wenigstens ein Deckelement aufweisen.

Ein solches Deckelement kann die Form eines Kreisrings aufweisen, oder es sind mehrere Deckelemente an der axialen Seite vorhanden, die jeweils in Form von Kreisringsegmenten ausgestaltet sind und die zusammen einen Kreisring ausbilden.

Beispielsweise kann das Deckelement bzw. können mehrere Deckelemente sämtliche Magnete des Rotors an einer axialen Seite abdecken.

Um keine zusätzlichen elektromagnetischen Verluste im oder am Rotor zu erzeugen, kann das Deckelement aus einem elektrisch nicht leitfähigen Material gefertigt sein.

Das Deckelement kann stoffschlüssig mit den Magneten und/ oder dem Magnetträger verbunden sein. Insbesondere kann das Deckelement mit dem Magnetträger und/oder mit dessen Magneten mittels Klebung verbunden sein. Dadurch entsteht in axialer Richtung eine axial sehr steife Sandwichstruktur, welche einer axialen Verformung des Rotors entgegenwirkt.

In einer Ausführungsform des Rotors ist vorgesehen, dass das Deckelement wenigstens einen Magneten axial abstützt.

Das bedeutet, dass von einem oder mehreren Magneten wirkende axiale Kräfte zumindest anteilig vom Deckelement aufgenommen werden. In dieser Ausführungsform ist das Deckelement sowie sein mechanischer Anschluss zum Magnetträger mit einer entsprechend ausreichenden axialen Stabilität auszuführen, um die axiale Belastung durch wenigstens einen Magneten zu ertragen.

Das Material des Magnetträgers kann insbesondere ein carbonfaserverstärkter Kunststoff sein. Das Material des Deckelements kann insbesondere ein glasfaserverstärkter Kunststoff sein.

Für höhere Anforderungen können aber auch Poly(p-phenylen-2,6-benzobisoxazol), das sogenannte PBO oder Aramid-Fasern zur Anwendung kommen.

Für die T-förmige Verbreiterung ist, aufgrund des hohen E-Moduls, die Verwendung von carbonfaserverstärktem Kunststoff besonders vorteilhaft.

Eine derartige Kombination von Werkstücken ermöglicht eine kosteneffiziente Herstellung des Rotors bei ausreichender Stabilität des Rotors bezüglich auftretender Kreiselkräfte, Fliehkräfte sowie gegebenenfalls axial wirkender Kräfte.

Die erfindungsgemäße elektrische Rotationsmaschine, insbesondere eine Axialflussmaschine, weist den Rotor sowie wenigstens einen Stator mit Wicklungen bzw. Spulen auf, der axial neben dem Rotor angeordnet ist. Ein erster axialer Abstand zwischen einer von dem Stator am Umfang der Wicklungsanordnung ausgebildeten axialen Stator-Stirnseite und der Mittenebene des Rotors ist geringer als ein zweiter axialer Abstand zwischen einer dem jeweiligen Stator zugewandten axialen Stirnseite der Verbreiterung und der Mittenebene des Rotors.

Insbesondere kann die elektrische Rotationsmaschine derart ausgestaltet sein, dass ein Spalt, der axial zwischen dem Stator und den Magneten des Rotors ausgebildet ist, von der Verbreiterung zumindest bereichsweise radial und entlang der axialen Richtung überlagert ist.

Bei einer Ausführung der elektrischen Rotationsmaschine, die zwei axial einander gegenüberliegende Statoren mit dazwischen angeordnetem Rotor aufweist, ist vorgesehen, dass sich die Verbreiterung axial beidseitig zumindest bereichsweise über die beidseitig axial zwischen dem Rotor und den axial benachbarten Statoren befindlichen Spalte erstreckt.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Figur 1:: eine herkömmlich ausgestaltete Axialflussmaschine in Schnittansicht,
- Figur 2:: eine erfindungsgemäß ausgestaltete Axialflussmaschine im Teilschnitt, und
- Figur 3:: der Rotor der erfindungsgemäß ausgestalteten Axialflussmaschine in perspektivischer Ansicht.

Auf Figur 1 wurde bereits zur Erläuterung des Standes der Technik eingegangen.

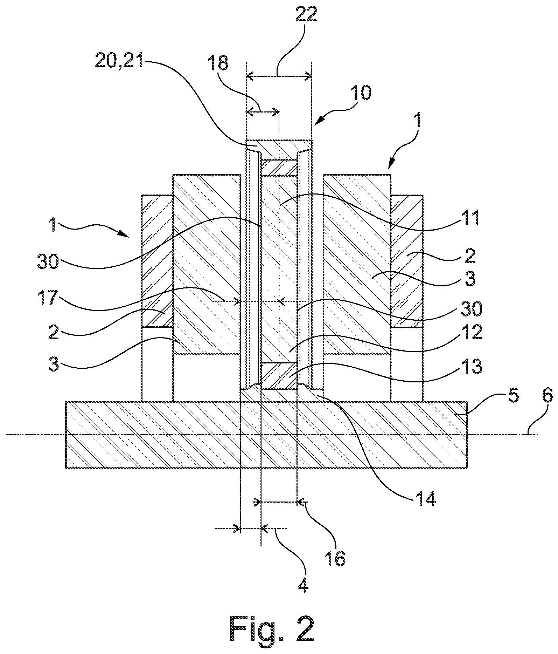

Figur 2 zeigt eine erfindungsgemäß ausgestaltete Axialflussmaschine im Teilschnitt. Diese umfasst koaxial zu einer Rotationsachse 6 ausgerichtet einen Rotor 10, und axial benachbart zu diesem Rotor 10 zwei Statoren 1. Die Statoren 1 sind mit einem jeweiligen Statorkern 2 und axial daran angeordneten Wicklungen 3 bzw. Spulen ausgebildet, die in Richtung auf den Rotor 10 ausgerichtet sind.

Zwischen den Wicklungen 3 der beiden Statoren 1 und dem Rotor 10 besteht jeweils ein axialer Spalt 4.

Der Rotor 10 sitzt mit seiner Nabe 14 auf einer Welle 5. Mit der Nabe 14 fest verbunden ist ein Magnetträger 13 des Rotors 10, in dem in der hier dargestellten Ausführungsform auf einem Umfang verteilt mehrere Magnete 12 angeordnet sind. In diesem Bereich weist der Rotor eine erste axiale Breite 16 auf, die im Wesentlichen durch die axiale Breite der Magnete 12 definiert ist.

Der Magnetträger 13 erstreckt sich dabei radial weiter nach außen als die Magnete 12. An der radial äußeren Seite des Rotors 10 bildet dieser eine Verbreiterung 20 aus, die auch als Fassring oder als Bandage bezeichnet werden kann. In der hier dargestellten Ausführungsform weist die Verbreiterung 20 im gezeigten Schnitt eine T-Form 21 auf, wobei der zentrale Steg der T-Form 21 in einer Mittenebene 11 des Rotors 10 liegt, in der auch eine axiale Symmetrieachse des hier dargestellten Schnitts verläuft.

Dabei ist ein erster axialer Abstand 17 zwischen einer von dem Stator 1 am Umfang der Wicklungsanordnung ausgebildeten axialen Stator-Stirnseite und der Mittenebene 11 des Rotors 10 geringer als ein zweiter axialer Abstand 18 zwischen einer dem jeweiligen Stator 1 zugewandten axialen Stirnseite der Verbreiterung 20 und der Mittenebene 11 des Rotors 10. Obwohl in Figur 2 der erste axiale Abstand 17 größer dargestellt ist als der zweite axiale Abstand 18, dient dies lediglich der besseren Übersichtlichkeit der Abbildung. Gemäß der beanspruchten Erfindung ist dies so zu verstehen, dass der erste axiale Abstand 17 geringer ist als der zweite axiale Abstand 18.

Die Anordnung der Verbreiterung 20 an der radialen Außenseite des Rotors 10 führt dazu, dass der Rotor 10 in diesem Bereich eine zweite axiale Breite 22 hat, die deutlich größer ist als die erste axiale Breite 16.Die Verbreiterung 20 verleiht dem Rotor 10 im radialen Außenbereich eine höhere Steifigkeit in axialer Richtung. Zusätzlich steht durch die Verbreiterung 20 in diesem Bereich mehr Material zur Verfügung, um auftretenden Fliehkräfte aufzunehmen.

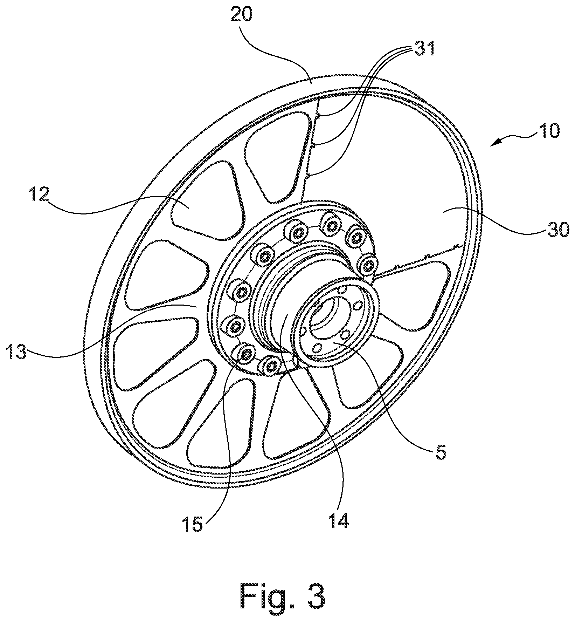

Wie insbesondere aus Figur 3 ersichtlich ist, weist der Rotor 10 an seinen axialen Seiten jeweils wenigstens ein Deckelement 30 auf, welches die Magnete 12 sowohl abdeckt, als auch in der Lage ist, von den Magneten 12 axial bewirkte Kräfte zumindest anteilig aufzunehmen. Derart stützen die Deckelemente 30 die Magnete 12 in axialer Richtung.

Die Deckelemente 30 werden insbesondere stoffschlüssig, wie zum Beispiel durch Kleben an die Magneten 12 und/oder an die Verbreiterung 20 im radial äußeren Bereich des Rotors 10 verbunden. Dadurch entsteht aus den Deckelementen 30 und den Magneten 12 eine axial steife Sandwichstruktur. Figur 3 zeigt dabei exemplarisch mehrere Punkte an dem hier dargestellten Segment eines Deckelements 30, an welchem Klebungen 31 ausgeführt sein können.

Aufgrund dessen, dass sowohl der Magnetträger 13 als auch ein jeweiliges Druckelement 30 aus einem faserverstärkten Kunststoffbauteil ausgeführt sein kann, wie zum Beispiel aus einem glasfaserverstärkten Kunststoff oder aus einem carbonfaserverstärkten Kunststoff, und die Nabe 14 insbesondere als ein metallisches Bauteil gefertigt sein kann, sieht die hier dargestellte Ausführungsform des Rotors 10 vor, mittels Verschraubungen 15 eine feste mechanische Verbindung zwischen der Nabe 14 und dem Magnetträger 13 und/oder den Deckelementen 30 zu realisieren.

Mit dem hier vorgeschlagenen Rotor und der damit ausgestatteten elektrischen Rotationsmaschine werden Einrichtungen zur Verfügung gestellt, die in einfacher und kostengünstiger Weise einen effizienten und verschleißarmen Betrieb gewährleisten.

### Bezugszeichenliste

- 1: Stator
- 2: Statorkern
- 3: Wicklung
- 4: Spalt
- 5: Welle
- 6: Rotationsachse
- 10: Rotor
- 11: Mittenebene
- 12: Magnet
- 13: Magnetträger
- 14: Nabe
- 15: Verschraubung
- 16: erste axiale Breite
- 17: erster axialer Abstand
- 18: zweiter axialer Abstand
- 20: Verbreiterung
- 21: T-Form
- 22: zweite axiale Breite
- 30: Deckelement
- 31: Klebung

## Patentansprüche

1. Elektrische Rotationsmaschine, insbesondere Axialflussmaschine, die aufweist:
einen Rotor (10), der eine Nabe (14), mehrere Magnete (12); und zur Fixierung der Magnete (12) einen Magnetträger (13) aufweist, mit dem die Magnete (12) in Bezug zu der Nabe (14) auf einem Umfang positioniert sind, wobei der Magnetträger (13) sich nach radial außen weiter als die Magnete (12) erstreckt und auf dem Umfang der Positionierung der Magnete (12) eine erste axiale Breite (16) aufweist und radial außerhalb der Magnete (12) eine Verbreiterung (20) ausbildet, die eine zweite axiale Breite (22) aufweist, die größer ist als die erste axiale Breite (16), und
wenigstens einen Stator (1) mit Wicklungen (3), der axial neben dem Rotor (10) angeordnet ist,
**dadurch gekennzeichnet, dass**
ein erster axialer Abstand (17) zwischen einer von dem Stator (1) an einem Umfang der Wicklungsanordnung ausgebildeten axialen Stator-Stirnseite und einer Mittenebene (11) des Rotors (10) geringer als ein zweiter axialer Abstand (18) zwischen einer dem jeweiligen Stator (1) zugewandten axialen Stirnseite der Verbreiterung (20) und der Mittenebene (11) des Rotors (10) ist.

2. Elektrische Rotationsmaschine nach Anspruch 1, **dadurch gekennzeichnet, dass** die Verbreiterung (20) bezogen auf eine senkrecht zu einer Rotationsachse (6) des Rotors (10) verlaufende Mittenebene (11) des Rotors (10) achsensymmetrisch ausgebildet ist.

3. Elektrische Rotationsmaschine nach Anspruch 1 oder 2, **dadurch gekennzeichnet, dass** der Magnetträger (13) im Wesentlichen aus einem elektrisch nicht leitfähigen Material gefertigt ist.

4. Elektrische Rotationsmaschine nach einem der Ansprüche 1 bis 3, **dadurch gekennzeichnet, dass** der Rotor (10) an wenigstens einer axialen Seite und die Magnete (12) im Wesentlichen axial abdeckend zumindest ein Deckelement (30) aufweist.

5. Elektrische Rotationsmaschine nach Anspruch 4, **dadurch gekennzeichnet, dass** das Deckelement (30) aus einem elektrisch nicht leitfähigen Material gefertigt ist.

6. Elektrische Rotationsmaschine nach Anspruch 4 oder 5, **dadurch gekennzeichnet, dass** das Deckelement (30) stoffschlüssig mit den Magneten (12) und/ oder dem Magnetträger (13) verbunden ist.

7. Elektrische Rotationsmaschine nach einem der Ansprüche 4 bis 6, **dadurch gekennzeichnet, dass** das Deckelement (30) wenigstens einen Magneten (12) axial abstützt.

8. Elektrische Rotationsmaschine nach einem der Ansprüche 4 bis 7, **dadurch gekennzeichnet, dass** das Material des Magnetträgers (13) ein carbonfaserverstärkter Kunststoff ist, und das Material des Deckelements (30) ein glasfaserverstärkter Kunststoff ist.

9. Elektrische Rotationsmaschine nach einem der Ansprüche 1 bis 8, **dadurch gekennzeichnet, dass** ein Spalt (4), der axial zwischen dem Stator (1) und den Magneten (12) des Rotors (10) ausgebildet ist, von der Verbreiterung (20) zumindest bereichsweise radial und entlang der axialen Richtung überlagert ist.

## Claims

1. An electric rotary machine, in particular an axial flux machine, having:
a rotor (10) which has a hub (14), a plurality of magnets (12) and, for fixing the magnets (12), a magnet carrier (13) with which the magnets (12) are positioned on a circumference in relation to the hub (14), the magnet carrier (13) extending radially outward beyond the magnets (12) and having a first axial width (16) on the circumference where the magnets (12) are positioned and forming a widened portion (20) radially outside the magnets (12) which has a second axial width (22) that is greater than the first axial width (16), and
at least one stator (1) having windings (3) which is arranged axially next to the rotor (10),
**characterised in that**
a first axial distance (17) between an axial stator end face formed by the stator (1) on a circumference of the winding arrangement and a central plane (11) of the rotor (10) is less than a second axial distance (18) between an axial end face of the widened portion (20) facing the stator (1) and the central plane (11) of the rotor (10).

2. The electric rotary machine according to claim 1, **characterised in that** the widened portion (20) is axially symmetrical with respect to a central plane (11) of the rotor (10) which runs perpendicular to an axis of rotation (6) of the rotor (10).

3. The electric rotary machine according to claim 1 or 2, **characterised in that** the magnet carrier (13) is made substantially of an electrically non-conductive material.

4. The electric rotary machine according to any one of claims 1 to 3, **characterised in that** the rotor (10) has at least one cover element (30) on at least one axial side, substantially axially covering the magnets (12).

5. The electric rotary machine according to claim 4, **characterised in that** the cover element (30) is made of an electrically non-conductive material.

6. The electric rotary machine according to claim 4 or 5, **characterised in that** the cover element (30) is integrally connected to the magnets (12) and/or the magnet carrier (13).

7. The electric rotary machine according to any one of claims 4 to 6, **characterised in that** the cover element (30) axially supports at least one magnet (12).

8. The electric rotary machine according to any one of claims 4 to 7, **characterised in that** the material of the magnet carrier (13) is a carbon fibre-reinforced plastic and the material of the cover element (30) is a glass fibre-reinforced plastic.

9. The electric rotary machine according to any one of claims 1 to 8, **characterised in that** a gap (4) which is formed axially between the stator (1) and the magnets (12) of the rotor (10) is overlapped at least partially radially and axially by the widened portion (20).

## Revendications

1. Machine électrique tournante, en particulier machine à flux axial, qui présente :
un rotor (10) qui présente un moyeu (14), plusieurs aimants (12) ; et pour fixer les aimants (12) un support d'aimants (13), avec lequel les aimants (12) sont positionnés sur une circonférence par rapport au moyeu (14), dans lequel le support d'aimants (13) s'étend radialement vers l'extérieur au-delà des aimants (12) et présente une première largeur axiale (16) sur la circonférence de positionnement des aimants (12) et forme un élargissement (20) radialement à l'extérieur des aimants (12) qui présente une seconde largeur axiale (22) supérieure à la première largeur axiale (16), et
au moins un stator (1) comportant des enroulements (3) qui sont agencés axialement à côté du rotor (10),
**caractérisée en ce que**
une première distance axiale (17) entre une face frontale axiale de stator formée par le stator (1) sur une circonférence de l'agencement d'enroulements et un plan central (11) du rotor (10) est inférieure à une seconde distance axiale (18) entre une face frontale axiale de l'élargissement (20) faisant face au stator (1) respectif et le plan central (11) du rotor (10).

2. Machine électrique tournante selon la revendication 1, **caractérisée en ce que** l'élargissement (20) est formé axialement symétrique par rapport à un plan central (11) du rotor (10) qui se prolonge perpendiculairement à un axe de rotation (6) du rotor (10).

3. Machine électrique tournante selon la revendication 1 ou 2, **caractérisée en ce que** le support d'aimants (13) est essentiellement fabriqué à partir d'un matériau électriquement non conducteur.

4. Machine électrique tournante selon l'une des revendications 1 à 3, **caractérisée en ce que** le rotor (10) présente au moins un élément de recouvrement (30) sur au moins un côté axial et recouvrant les aimants (12) sensiblement axialement.

5. Machine électrique tournante selon la revendication 4, **caractérisée en ce que** l'élément de recouvrement (30) est fabriqué à partir d'un matériau électriquement non conducteur.

6. Machine électrique tournante selon la revendication 4 ou 5, **caractérisée en ce que** l'élément de recouvrement (30) est relié par complémentarité de matière aux aimants (12) et/ou au support d'aimants (13).

7. Machine électrique tournante selon l'une des revendications 4 à 6, **caractérisée en ce que** l'élément de recouvrement (30) supporte au moins un aimant (12) de manière axiale.

8. Machine électrique tournante selon l'une des revendications 4 à 7, **caractérisée en ce que** le matériau du support d'aimants (13) est un plastique renforcé de fibres de carbone et le matériau de l'élément de recouvrement (30) est un plastique renforcé de fibres de verre.

9. Machine électrique tournante selon l'une des revendications 1 à 8, **caractérisée en ce qu'**un espace (4), qui est formé axialement entre le stator (1) et les aimants (12) du rotor (10), est surmonté au moins par zones radialement et le long de la direction axiale par l'élargissement (20).
